# EUROPEAN PATENT APPLICATION

(11) **EP 3 118 772 A1**
(43) Date of publication of application: **18.01.2017**
(21) Application number: 16172506.4
(22) Date of filing: 01.06.2016
(51) Int. Cl.: G06K 9/00, H04N 5/14

(54) **IMAGE CONTENT PROVIDING APPARATUS AND IMAGE CONTENT PROVIDING METHOD**

(30) Priority: 15.07.2015 KR 20150100387
(71) Applicant: Samsung Electronics Co., Ltd., Gyeonggi-do 16677 (KR)
(72) Inventor: JEONG, Soon-mook, Yongin-si, Gyeonggi-do (KR); LEE, Ji-hyo, Suwon-si, Gyeonggi-do (KR)
(74) Representative: Walaski, Jan Filip

(57) **Abstract**

An image providing apparatus is provided. The image providing apparatus includes an output unit comprising output circuitry for outputting image contents; and a processor configured to control the output unit to divide the image content into a plurality of scenes, to determine attributes regarding the plurality of scenes based on feature information on the plurality of scenes, and to classify the plurality of scenes based on the determined attributes to output the classified scenes.

## Description

The present invention relates generally to an image content providing technology, and for example, to an image content providing apparatus for extracting attribute information from image contents, classifying a plurality of scenes of the image contents based on the extracted attribute information so as to provide the classified scenes, and a method for providing the image contents.

With various types of image contents provided by using a display apparatus, technologies of selectively providing scenes in an image content have been developed. For the representative example, there have been provided technologies of analyzing scene images based on characters on a frame basis and abstracting the analyzed scene images, or recognizing a genre of an image content and providing a highlight according to the genre.

However, these technologies merely identify the structural feature of an image content, and provide an abstract of scenes which are seen to be important on a frame basis, but do not suggest a method of providing an individual scene constituting a context meaning unit of the image content according to a meaning or a facial expression.

An aspect of the example embodiments relates to an image content providing method and an image providing apparatus which is to provide image contents capable of dividing image contents based on scenes, identify attributes regarding the divided plurality of scenes, classify the identified scenes based on attributes, and provide the classified scenes.

According to an embodiment of the present disclosure, there is provided an image content providing apparatus including an output unit comprising output circuitry configured to output an image content; and a processor configured to control the output unit to divide the image content into a plurality of scenes, determine attributes of the plurality of scenes based on feature information regarding the plurality of scenes, classify the plurality of scenes based on the determined attributes and output the classified scenes.

Herein, the processor may extract an image feature value from a plurality of image frames comprising the image content and an audio feature value from audio data comprising the image content.

The image feature value may include one or more of feature information of a character's face included in the image frame, motion power information regarding the character, definition information regarding the image frame, and conversion time information regarding a plurality of shots comprising the plurality of scenes.

The audio feature value may include one or more of a Back Ground Music (BGM), a speech, and an audio power comprising the plurality of scenes.

The processor may divide the image content into a plurality of scenes based on the extracted image feature value.

The processor may determine image frames in which the same characters appear among the plurality of image frames based on the extracted image feature value, and classify the image frames as the same scenes if the image frames satisfy a condition that time intervals between the image frames adjacent to each other based on a time sequence among the image frames in which the same characters appear are less than a preset time interval.

The processor may compare an image feature value extracted from an image frame comprising each of the plurality of scenes and an audio feature value extracted from audio data comprising the plurality of scenes, with feature information indicating attributes of each scene, and determine an attribute of each of the plurality of scenes.

The processor may determine scenes having the same attributes based on attributes of the plurality of scenes, and classify thumbnails regarding scenes having the same attributes according to the attributes and output the classified scenes.

The processor may determine a scene having an attribute which corresponds to a user's preference among attributes of the plurality of scenes based on the user's preference, and output thumbnails regarding the scene which corresponds to the user's preference.

The processor may output a list including attributes of the plurality of scenes, and output thumbnails regarding scenes having attributes selected from the list.

According to an example embodiment, there is provided an image content providing method and an image content providing apparatus including an output unit comprising output circuitry configured to output an image content may include dividing the image content into a plurality of scenes; determining attributes of the plurality of scenes based on feature information regarding the plurality of scenes; and classifying the plurality of scenes according to the determined attributes and outputting the divided scenes.

Herein, the method of providing an image content may further include extracting an image feature value from a plurality of image frames comprising the image content and an audio feature value from audio data comprising the image content.

The image feature value may include one or more of face feature information regarding the character included in the image frame, motion power information regarding the character, definition information regarding the image frame, and conversion time information regarding a plurality of shots comprising the plurality of scenes.

The audio feature value may include one or more of a BGM, a speech, and an audio power comprising the plurality of scenes.

The method may further include dividing the image contents into a plurality of scenes based on the extracted image feature value.

The method may further include determining image frames in which the same characters appear among the plurality of image frames based on the extracted image feature value; and classifying image frames as the same scenes if the image frames satisfy a condition that time intervals between image frames adjacent to each other based on a time sequence among the image frames in which the same characters appear are less than a preset time interval.

The method may further include comparing an image feature value extracted from an image frame comprising each of the plurality of scenes and an audio feature value extracted from audio data comprising the plurality of scenes with feature information indicating attributes of each scene, and determining the attribute of each of the plurality of scenes.

The method may further include determining a scene having the same attribute based on the attributes of the plurality of scenes; and classifying thumbnails regarding the scenes having the same attribute based on attributes, and outputting the classified scenes.

The method may further include determining a scene which corresponds to the user's preference among attributes of the plurality of scenes based on the user's preference; and outputting thumbnails regarding scenes which corresponds to the user's preference.

The method may further include outputting a list including attributes of the plurality of scenes; and outputting thumbnails regarding scenes having attributes selected from the list.

According to the above-described various example embodiments, a user convenience may be improved by enabling a user to search a user's desired scene easier and faster since each scene comprising an image content may be provided by classifying the scenes according to attributes.

The above and/or other aspects of the present disclosure will be more apparent from the following detailed description, taken in conjunction with the accompanying drawings, in which like reference numerals refer to like elements, and wherein:
FIG. 1 is a diagram illustrating an example of implementation of an image content providing apparatus according to an example embodiment;
FIGS. 2A, 2B and 3 are block diagrams illustrating an example configuration of the image content providing apparatus according to an example embodiment;
FIG. 4 is a diagram illustrating an example method of dividing scenes according to an example embodiment;
FIG. 5 is a flowchart illustrating an example process of extracting feature information depending on attributes according to an example embodiment;
FIG. 6 is a diagram illustrating an example method of detecting attributes of scenes according to an example embodiment;
FIGS. 7A and 7B are diagrams illustrating an example method of outputting scenes depending on attributes according to an example embodiment;
FIGS. 8A and 8B are diagrams illustrating an example method of outputting scenes depending on attributes according to an example embodiment;
FIG. 9 is a diagram illustrating an example method of outputting scenes depending on attributes according to an example embodiment; and
FIG. 10 is a flowchart illustrating an example method of controlling an image content providing apparatus according to an example embodiment.

Certain example embodiments are described in greater detail below with reference to the accompanying drawings.

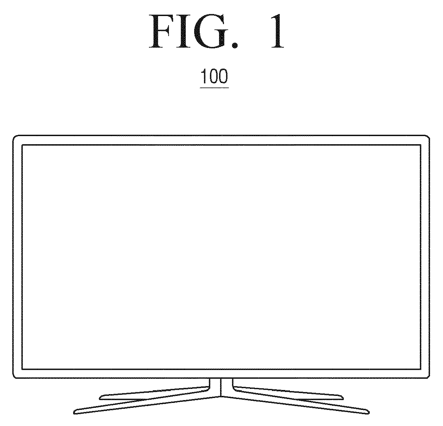

FIG. 1 is a drawing provided to explain an example of implementation of an image content providing apparatus 100 according to an example embodiment of the present disclosure.

Referring to FIG. 1, the image content providing apparatus 100 is configured to output image contents. To achieve this, the image content providing apparatus 100 may be implemented as a display apparatus capable of outputting image contents to output the image contents. For example, the image content providing apparatus 100 may be implemented as a television, a personal computer, a smart phone, a personal digital assistant (PDA), a packet data protocol (PDP), and the like which are capable of playing image contents.

Meanwhile, the image contents may be image contents having a story composed of actions, dialogues, and etc. between characters, for example, a movie, a drama, and so on.

In this case, the image contents may be configured by a plurality of scenes. Herein, the scenes mean a set of image frames composed of spatially and temporally continuous image frames in the movie and the drama, that is, a set of image frames composed of a series of actions or conversations occurring at the same location and time. Furthermore, the image frames mean one page among still images comprising a moving image.

Meanwhile, the image content providing apparatus 100 may determine attributes regarding a plurality of scenes comprising the image contents, and classify the plurality of scenes based on the determined attributes and output the classified scenes.

For example, if an image content is configured by action scenes and romance scenes, the image content providing apparatus 100 may determine whether each of a plurality of scenes comprising the image content corresponds to an action scene or a romance scene, and divide the plurality of scenes comprising the content into the action scene and the romance scene and output the divided scenes.

By using this method, particularly in case of image contents focused on a story, the plurality of scenes are classified and output based on attributes according to a mood or a theme, enabling a user to appreciate a multimedia from various perspectives classified according to attributes of a scene.

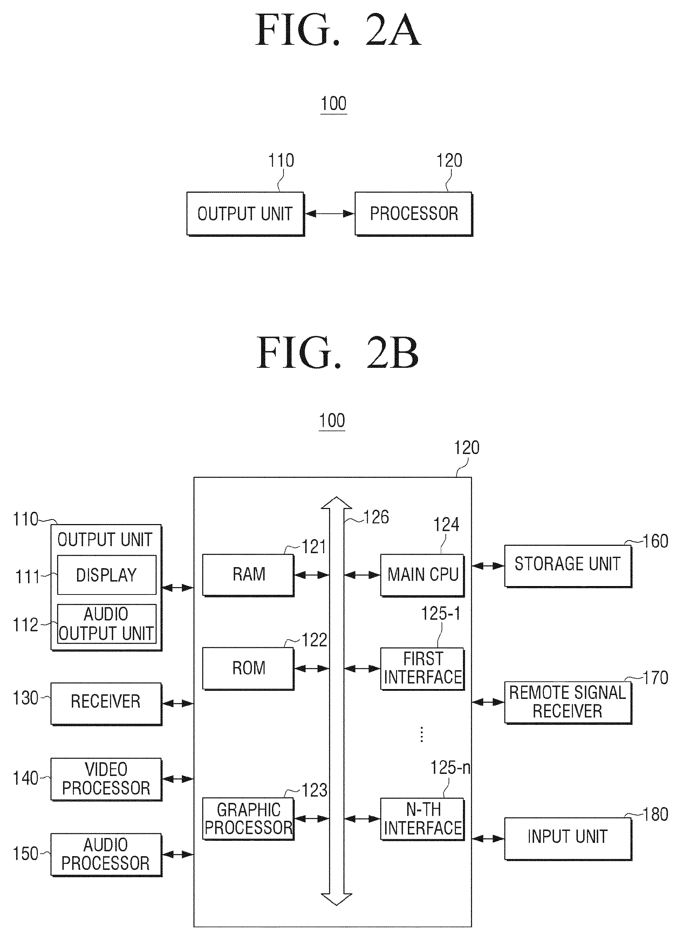

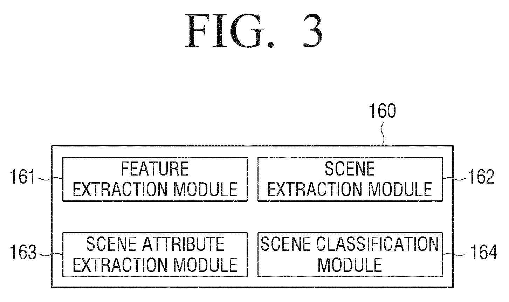

FIGS. 2A, 2B and 3 are block diagrams provided to explain the feature of the image content providing apparatus 100 according to an example embodiment.

Referring to FIG. 2A, the image content providing apparatus 100 includes an output unit (e.g., including output circuitry) 110 and a processor (e.g., including processing circuitry) 120.

The output unit 110 may include output circuitry configured to output image contents. Herein, in respect that the image contents are configured by image data and audio data, the output unit 110 may include a display (not shown) for outputting the image data and an audio output unit (not shown) for outputting the audio data.

Meanwhile, as described in the above, the image contents may be image contents having a story composed of actions and dialogues between characters, for example, a movie, a drama, and etc., and the image contents may be configured by a plurality of scenes.

The processor 120 may control the output unit 110 to output the image contents. Specifically, the processor 120 may control the output unit 110 to output an image and an audio separated from the image contents.

Meanwhile, the processor 120 may classify a plurality of scenes comprising an image content according to attributes and output the classified scenes.

To achieve this, the processor 120 may divide the images content into a plurality of scenes, and may determine attributes regarding the plurality of scenes based on feature information regarding the plurality of scenes.

Herein, the attributes indicate a mood or a story of each scene according to dialogues, actions, and a relation between characters, and etc. For example, image contents may be divided by a familiar scene, an action scene, a silent scene, a romance scene, a sad scene, a pleasant scene, and so on.

Specifically, the processor 120 may output an audio feature value from a plurality of image frames comprising the image contents and may output the audio feature value from audio data comprising the image contents.

Herein, the image feature value may include at least one of character's face feature information included in an image frame, motion power information regarding the character, definition information regarding image frames, and conversion time information regarding a plurality of shots comprising a plurality of scenes.

Firstly, the processor 120 may perform a face recognition function regarding the image frame to extract the face feature information of the characters included in the image frame.

Herein, the face recognition function may include a process of detecting a face from an image frame and a process of recognizing feature data of the face.

For example, the processor 120 may detect the face from the image frame by using color information of the face, and extract features included in the face by using the feature of face patterns in an entire area or geometrical feature of the face, for example, eyes, nose, mouth, and so on.

After then, the processor 120 may extract face feature information of the character included in the image frame based on a result of face recognition. Herein, the face feature information may include an angle, a pose, a location of the face, a proximity between the faces, a face expression, and so on.

Specifically, the processor 120 may determine the angle and the pose of the character's face included in the image frame.

For example, the processor 120 may detect features such as eyes, nose, mouth, and the like from the character's face included in the image frame, compare the detected features with features of a prestored standard face image (specifically, a set of faces having a symmetry of a natural face and a statistical symmetry), calculate a deviation between a photographic angle when photographing a face image and a photographic angle when photographing a standard image, and determine an angle of the character's face by using the calculated deviation.

Furthermore, the processor 120 may analyze a direction of eyes and etc. extracted in the process of recognizing the face and the face angle, and may determine a pose of the character's face. For example, the pose of the character's face may include tilting head or moving head up.

The processor 120 may determine a location of the character's face and a proximity between the faces included in the image frame.

For example, the processor 120 may determine a location of the face in the image frame by setting features such as eyes, nose, mouth, and etc. as a reference coordinate. In addition, the processor 120 may determine a proximity between the character's faces based on the location of detected face.

In addition, the processor 120 may determine a face expression based on a size and shape of features included in the face.

For example, the processor 120 may determine the character's expression according to ratio changes in black and white parts of the eyes, a degree of mouth corner lift, and a change in an area of the mouth based on the size and shape of the eyes and the mouth extracted in the process of face recognition. This expression recognition technology includes a method of using edge information, an approach based on luminance, chrominance, a geometric appearance and a symmetry of the face, a method of Principal Component Analysis (PCA), a method of using a template matching, an approach using a curvature of the face, a method of using a nerve network, and so on.

Meanwhile, although a method of recognizing a face and extracting face feature information from the recognized face is described in the above, this method is merely an example embodiment, and the processor 120 may certainly recognize the face and extract the face feature information by using various methods disclosed in the related arts.

Meanwhile, the processor 120 may extract motion power information regarding the character. Herein, the motion power information may be obtained by counting a number of the character's movement on an hourly basis. Accordingly, as the number of the character's movement increases, the motion power may have a higher value.

The processor 120 may extract definition information regarding the image frame. Herein, the definition information may mean a degree of blurring in a video image. For example, when the character suddenly turns the body from a stationary position, the blurring may occur in the video image. The degree of blurring in the video image may be determined by analyzing a plurality of pixels.

Meanwhile, the processor 120 may extract conversation time information of a shot. Herein, the shot is a set of image frames generated by continuously photographing a certain object without stopping the process by using one camera, and the conversion time of the shot may be the time when one shot is converted into another shot.

Specifically, the processor 120 may determine a plurality of shots constituted of a plurality of frames in an image content, respectively, and extract a boundary between shots to determine the conversion time of the shots.

For example, it may be assumed that there are image frames 1, 2, and 3 for indicating a front appearance of a character A, and there are image frames 4, 5, and 6 for indicating a back appearance of the character A. In this case, unless the image frames 1, 2, and 3 are connected to the image frames 4, 5, and 6 without interruption, the processor 120 may determine the image frames 1, 2, and 3 as one shot, and may determine the image frames 4, 5, and 6 as another shot. Furthermore, the processor 120 may determine a boundary between the image frames 3 and 4 as a conversion time of shot.

In addition, a boundary between shots may be calculated by using a difference value of image feature information, wherein the image feature information may be extracted based on at least one of an average and a dispersion of pixel colors (RGV/HSV) in an image frame unit, a size of motion vector, a color histogram, and edge information. Thus, if a difference value of image feature information between continuous frames exceeds a preset value, it may be determined that two continuous frames form a boundary of shot conversion.

Herein, the processor 120 may extract a shot boundary based not only on image data, but also on audio data. Thus, the processor may extract the shot boundary from the audio data based on at least one of a volume, an energy, a sub-band energy, a low shot-time energy ratio, a zero crossing rate, a frequency centroid, a frequency bandwidth, a spectral flux, and a cepstral flux.

Meanwhile, the processor 120 may extract an audio feature value from the audio data comprising the image content.

Herein, the audio feature value may include at least one of a BGM, a speech, and an audio power.

Specifically, the processor 120 may extract the BGM and the speech in a scene section so that the processor may determine whether the BGM and the speech are inserted. Herein, if the processor 120 determines that the BGM and the speech is inserted in the scene section, the processor 120 may extract a beat of the BGM, a speed of the speech, a highness or a lowness of sounds regarding the BGM and the speech, and so on.

In addition, the processor 120 may determine an audio power based on the audio data. Herein, the processor 120 may determine the audio power according to a size of a frequency waveform of the audio data.

This feature value may be used to determine attributes associated with a mood or a circumstance of the corresponding scene.

Meanwhile, the processor 120 may divide the image content into a plurality of scenes based on the extracted image feature value.

Herein, the image feature value may be face feature information. That is, the processor 120 may divide the image content into a plurality of scenes based on characters appearing in the image content.

Specifically, the processor 120 may determine image frames in which the same characters appear among a plurality of image frames based on the extracted image feature value, and may classify the image frames as the same scenes if the image frames satisfy a condition that time intervals between the image frames adjacent to each other according to a time sequence among the image frames in which the same characters appear are less than a preset time interval.

To achieve this, the processor 120 may recognize faces of characters included in the plurality of image frames, respectively, and determine image frames in which the same characters appear among the plurality of image frames.

Specifically, the processor 120 may compare the faces of the characters in terms of a size, a shape, and etc. detected from the plurality of image images, and may determine image frames in which the same characters are included.

However, the processor 120 may also analyze a size of the character's face, and perform the aforementioned process only for image frames in which faces having a bigger size than a preset size are included.

Furthermore, the processor 120 may arrange the image frames including the same characters according to a time sequence, and may classify image frames as the same scenes if the image frames satisfy a condition that time intervals between the image frames adjacent to each other according to the time sequence among the image frames in which the same characters appear are less than a preset time interval.

Specifically, the processor 120 is configured to classify image frames as the same scenes if the image frames satisfy the condition that time intervals between the image frames adjacent to each other according to the time sequence among the plurality of image frames in which the same characters appear are less than a preset time interval, and classify a next frame as a different scene from its front frame among image frames adjacent to each other according to the time sequence if the time intervals between the image frames adjacent to each other according to the time sequence among the plurality of image frames in which the same characters appear exceed the preset time interval.

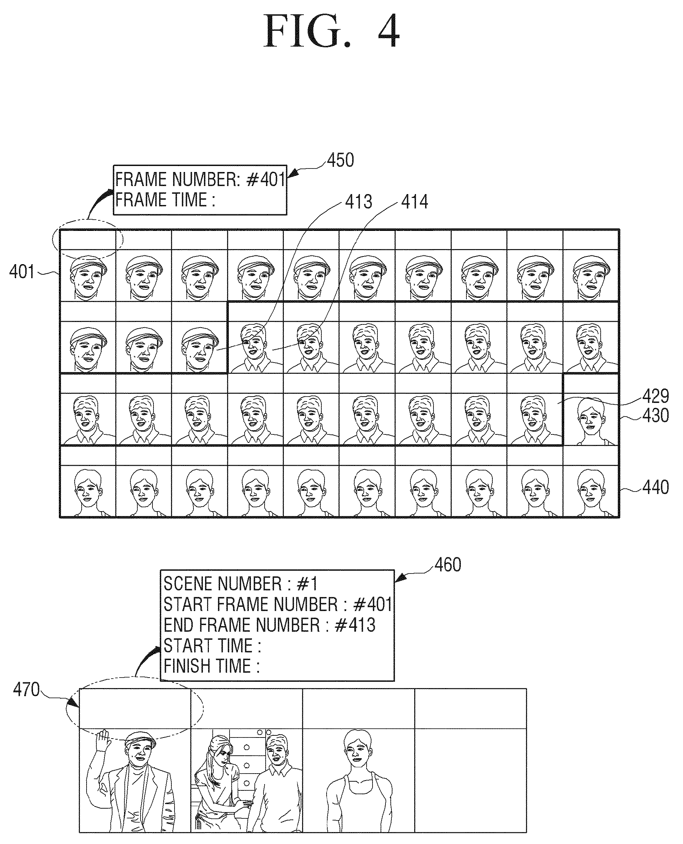

As the above, the processor 120 may use time information to divide an image content into a plurality of scenes. The above will be explained in greater detail with reference to FIG. 4.

FIG. 4 is a diagram illustrating an example method of classifying scenes according to an example embodiment of the present disclosure.

For example, the processor 120 may recognize faces included in a plurality of frames comprising an image content to determine image frames including the same characters, and as shown in FIG. 4, the processor 120 may arrange image frames including the same character A according to a time sequence. Herein, the processor 120 may control to map a frame number a frame time on each frame and store the mapped frames. For example, as shown in FIG. 4, the processor 120 may map the frame number and the frame time on a frame 401 (450).

In this case, the processor 120 may determine that image frames 401 to 413 constitute the same scene if time intervals between image frames adjacent to each other among the image frames 401 to 413 are less than a preset time (scene 1).

Furthermore, if time intervals between frames 413 and 414 including the same character A exceed a preset time, the processor 120 may determine that the frame 413 constitutes a scene different from the frame 414. Moreover, if time intervals between image frames adjacent to each other among frames 414 to 429 are less than a preset time, the processor 120 may determine that the frames 414 to 429 constitute the same scene (scene 2).

Furthermore, if time intervals between frames 429 and 430 including the same character A exceed a preset time, the processor 120 may determine that the frame 429 constitutes a scene different from the frame 430. Moreover, if time intervals between image frames adjacent to each other among frames 430 to 440 are less than a preset time, the processor 120 may determine that the frames 430 to 440 constitute the same scene (scene 3).

Meanwhile, the processor 120 may classify scenes according to whether the same characters appearing in the image content are located in the same location.

For example, a frame in which characters A, B, and C appear in an area of D and a frame in which characters A, B, and E appear in an area of F may constitute a different scene from each other since the character A or B is located in a different area from each other, D or F.

As the above, the processor 120 may divide an image content into a plurality of scenes.

In addition, the processor 120 may control to map a scene number, start and end frame numbers, and start and finish times on each of the divided scene to store therein.

For example, as illustrated in FIG. 4, information regarding the scene number, the start and end frame numbers, and the start and finish times 460 may be mapped on each of the divided scene 470 to store therein.

The processor may compare an image feature value extracted from image frames comprising each of a plurality of scenes and an audio feature value extracted from audio data comprising each of a plurality of scenes with feature information indicating attributes of each scene, and determine attributes regarding each of the plurality of scenes.

To achieve this, the image content providing apparatus 100 may classify feature information indicating attributes of each scene according to the attributes of each scene and pre-store the feature information.

Accordingly, the image content providing apparatus 120 may compare an image feature value and a voice feature value regarding the plurality of scenes comprising the image content with the prestored feature information, and determine attributes regarding each of the plurality of scenes comprising the image content.

For example, it may be assumed that a proximity between a plurality of character's faces is less than a preset distance, and a face angle satisfies a viewing angle from each other, and a case that a BGM has a slower tempo than a preset value is classified as feature information which indicates a familiar scene to be prestored.

Furthermore, it may be assumed that a motion power value of the character is bigger than a preset value, and a definition feature value regarding an image frame is less than a preset value, and the BGM has a faster tempo than the preset value is classified as feature information indicating an action scene to be prestored.

Moreover, it may be assumed that a number of shot conversion is less than a preset number, and the BGM is not detected or has a slower tempo than a preset value, and a case that an audio power value satisfies a value less than a preset value is classified as feature value indicating a silent scene to be prestored.

In this case, the processor 120 compares an image feature value and a voice feature value regarding a plurality of scenes comprising the image content with the prestored feature information, respectively, and if the image feature value and the voice feature value of a scene among the plurality of scenes satisfy a condition that a proximity between faces of a plurality of characters is less than a preset distance, and a face angle satisfies a viewing angle from each other, and a BGM has a slower tempo than a preset value, the scene is determined as a familiar scene, and if the image feature value and the voice feature value of a scene satisfy a condition that a motion power value of a character is bigger than a preset value, and a definition feature value regarding an image frame is less than a preset value, and the BGM has a faster tempo than a preset value, the scene is determined as an action scene, and if the image feature value and the voice feature value of a scene satisfy a condition that a conversion of a shot is less than a preset number, and the BGM is not detected or has a slower tempo than a preset value, and an audio power value is less than a preset value, the scene is determined as a silent scene.

Meanwhile, although the feature information classified as the familiar scene, the action scene, and the silent scene is described in the above example embodiments, these are simply one aspect of example embodiments, and feature information indicating not only the above scenes, but also a romance scene, a sad scene, a pleasant scene, and etc. may be classified and prestored, so that the processor 120 may use these feature information to determine whether the plurality of scenes comprising the image content are the romance scene, the sad scene, the pleasant scene, and etc.

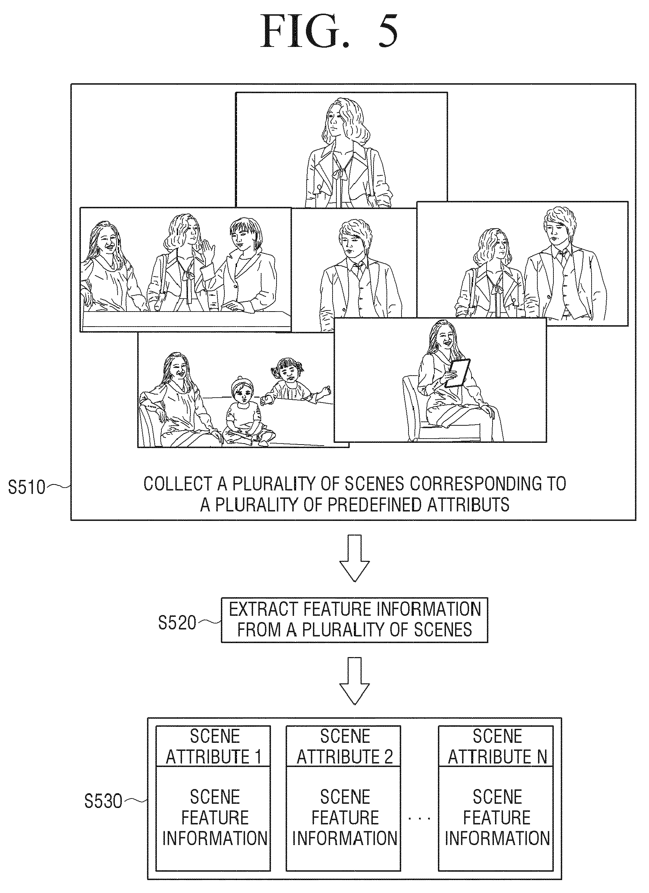

Meanwhile, the processor 120 may use a machine learning as shown in FIG. 5 to extract and classify the feature information according to attributes of each scene.

FIG. 5 is a flowchart illustrating an example process of extracting and classifying feature information depending on attributes of each scene according to an example embodiment.

Referring to FIG. 5, the processor 120 is configured to collect a plurality of scenes corresponding to a plurality of predefined attributes, respectively, and tag start points and end points of the plurality of scenes (S510). Then, the feature information is extracted from the plurality of scenes, respectively (S520).

Furthermore, the processor 120 is configured to recognize the feature information extracted from the tagged section corresponding to the plurality of scenes having predefined attributes as corresponding attributes so as to classify the feature information extracted from the plurality of scenes according to the predefined attributes (S530), respectively.

For example, the processor 120 may tag a start time and a finish time of a plurality of scenes predefined as a romance scene, respectively. Then, if a feature value is extracted from the romance scene, the processor 120 may classify related information as feature values corresponding to attributes corresponding to the romance scene. In addition, a common feature value among the feature values classified as attributes of the romance scene may be determined as feature information corresponding to the romance scene.

For example, if feature values indicating that two characters are viewing each other, and a distance between two faces is less than a preset distance, and each of the character is determined as a female and a male as a result of character recognition is commonly extracted from the plurality of scenes, the corresponding feature information may be classified as information indicating the romance scene, and the feature information may be stored.

Furthermore, the processor 120 may update the extracted and classified feature information according to attributes of scenes through a machine learning.

Specifically, the processor 120 may determine attributes regarding the plurality of scenes comprising the image content, and then, add common feature information among feature values extracted from each scene to feature information indicating the corresponding scene so as to update feature information classified according to attributes of scenes.

For example, it may be assumed that there is a scene in which a proximity between faces of a plurality of characters is less than a preset distance, a face angle satisfies a viewing angle from each other, without blurring phenomenon, a continuous dialogue between characters takes place, and that there is a scene in which the proximity between faces of the plurality of characters is less than the preset distance, and the face angle satisfies the viewing angle from each other, having no blurring phenomenon and the continuous dialogue between characters.

In this case, since the proximity between faces of the plurality of characters in the corresponding scenes is less than the preset distance, and the face angle satisfies the viewing angle from each other, the processor 120 may determine that the corresponding scenes are familiar scenes.

In addition, the processor 120 may extract and classify an image feature value having no blurring phenomenon which is common feature information among feature information extracted from the corresponding scenes as feature information indicating a familiar scene.

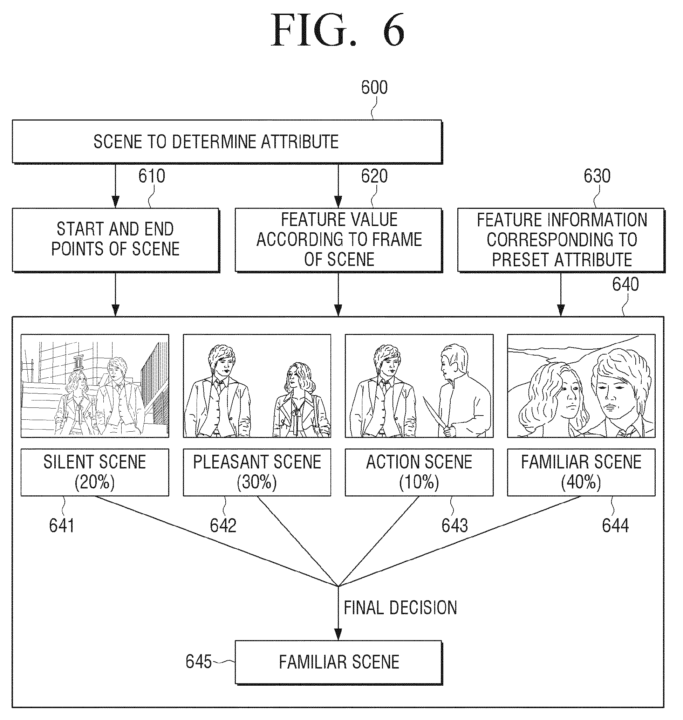

Meanwhile, if the same scene includes a plurality of attributes, the processor 120 determines a representative attribute among the plurality of attributes, and determines the representative attribute as an attribute of the corresponding scene. The above will be explained in greater detail with reference to FIG. 6.

FIG. 6 is a diagram illustrating an example method for detecting attributes of a scene according to an example embodiment of the present disclosure.

Referring to FIG. 6, the processor 120 is configured to extract scenes from an image content by using a start point and an end point 610 of the scenes, and may determine attributes of the corresponding scene 600 by using feature information comprising the corresponding scene according to each frame 620 and feature information classified according to attributes 630.

Specifically, the processor 120 may compare the feature information regarding each of a plurality of frames 620 included in the scene 600 with the feature information classified by scene attributes 630 to detect attributes of the corresponding scene 600. At this time, a plurality of attributes may be detected from one scene 640.

For example, as illustrated in FIG. 6, attributes corresponding to a silent scene 641, a pleasant scene 642, an action scene 643, and a familiar scene 644 may be detected from a plurality of frames included in the scene 600.

In this case, the processor 120 may count a number of image frame including feature information matching with each attribute, and calculate a proportion of an image frame which satisfies each attribute among the plurality of image frames comprising the scene.

For example, proportions regarding each attribute may be calculated as a silent scene 641 (20%), a pleasant scene 642 (30%), an action scene 643 (10%), and a familiar scene 644 (40%).

In this case, the processor 120 may determine an attribute having a highest proportion among the plurality of attributes as a representative attribute, and regard the determined representative attribute as an attribute of the corresponding scene.

For example, in case of FIG. 6, considering the familiar scene shows the highest proportion, the familiar scene 644 (40%) may be determined as a representative attribute 645 of the scene 600.

Meanwhile, the processor 120 may control an output unit 110 to classify a plurality of scenes according to the determined attribute, and output the classified scenes.

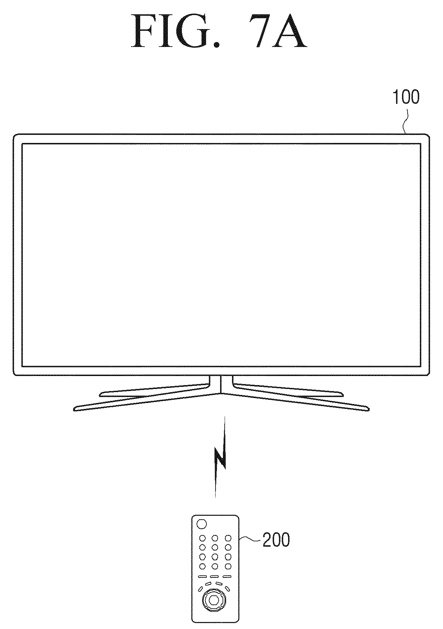

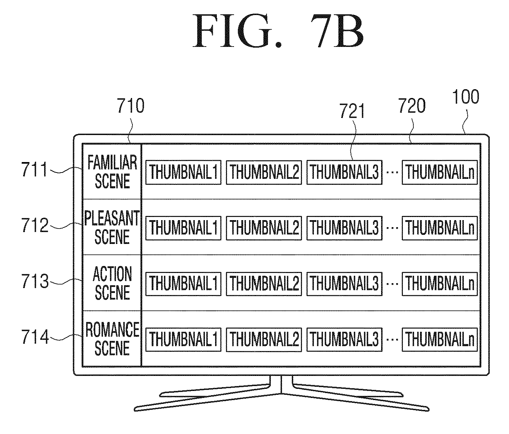

Specifically, the processor 120 may control the output unit 110 to determine a scene having the same attributes based on attributes regarding the plurality of scenes, classify thumbnails regarding scenes having the same attributes according to attributes, and output the classified thumbnails. The above will be explained in greater detail with reference to FIG. 7.

FIGS. 7A and 7B are diagrams illustrating an example method of outputting scenes depending on attributes according to an example embodiment. For example, as illustrated in FIG. 7A, in response to a control signal being received from a remote control 200 to classify a plurality of scenes comprising an image content according to attributes and to display the classified scenes, the processor 120 may determine attributes regarding the plurality of scenes comprising the image content.

In this case, the processor 120 may control the output unit 110 to classify thumbnails regarding a plurality of scenes having the same attributes and output the classified thumbnails.

For example, as illustrated in FIG. 7B, from among a plurality of scenes comprising an image content, if attributes regarding a familiar scene 711, a pleasant scene 712, an action scene 713, and a romance scene 714 are detected, the processor 120 may control the output unit 110 to generate a list 710 of these attributes and output the generated list 710. In addition, the processor 120 may control the output unit 110 to generate thumbnails of scenes corresponding to each attribute and output the generated thumbnails 720. Herein, in response to a control signal being received to select a thumbnail 721, the processor 120 may control the output unit 110 to enlarge and display a scene corresponding to the thumbnail 721.

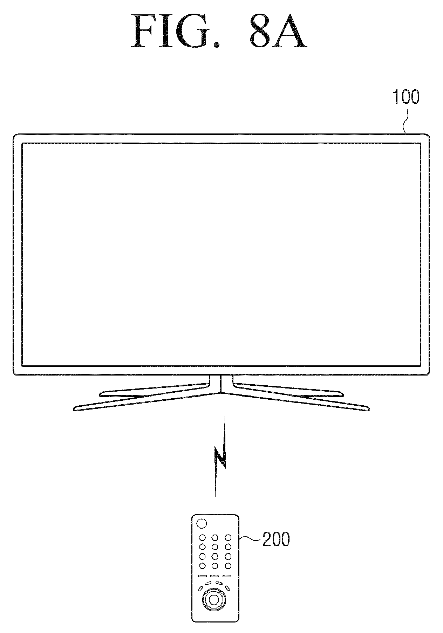

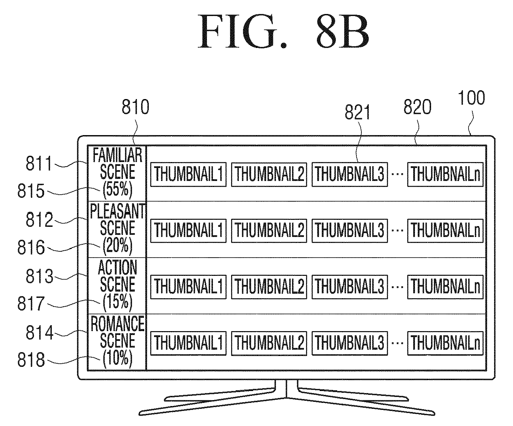

In addition, based on a user preference, the processor 120 may control the output unit 110 to determine a scene having attributes corresponding to the user preference among attributes regarding a plurality of scenes, and output a thumbnail of the scene corresponding to the user preference. The above will be explained in greater detail with reference to FIG. 8.

FIGS. 8A and 8B are diagrams illustrating an example method of outputting scenes depending on attributes according to an example of embodiments.

For example, as illustrated in FIG. 8A, in response to a control signal being received from a remote control 200 to classify a plurality of scenes comprising an image content according to attributes and display the classified scenes, the processor 120 may determine attributes of the plurality of scenes comprising the image content.

In addition, the processor 120 may determine a user preference regarding attributes. Specifically, the processor 120 may count a number of displaying each scene corresponding to the attributes, and generate a list of attributes according to the user preference based on the counted number of displaying scenes.

In this case, the processor 120 may control the output unit 110 to output the list of attributes according to the user preference and thumbnails regarding a plurality of scenes having the same attributes by classifying the thumbnails according to attributes.

For example, as illustrated in FIG. 8B, among the plurality of scenes comprising the image content, the processor 120 may detect attributes regarding a familiar scene 811, a pleasant scene 812, an action scene 813, and a romance scene 814. In addition, the processor 120 may generate a list of attributes including the detected attributes 810 based on the generated ranking of attributes according to the user preference. Herein, the processor 120 may control the output unit 110 to output selection proportions regarding each attribute 815, 816, 817, and 818 based on a number of selection regarding each of the attributes along with the list of attributes 810. In addition, the processor 120 may generate thumbnails regarding scenes corresponding to each attribute, and control the output unit 110 to output the generated thumbnails 720. Thereafter, in response to a control signal for selecting a thumbnail 821 being received, the processor 120 may control the output unit 110 to enlarge and display a scene corresponding to the thumbnail 821.

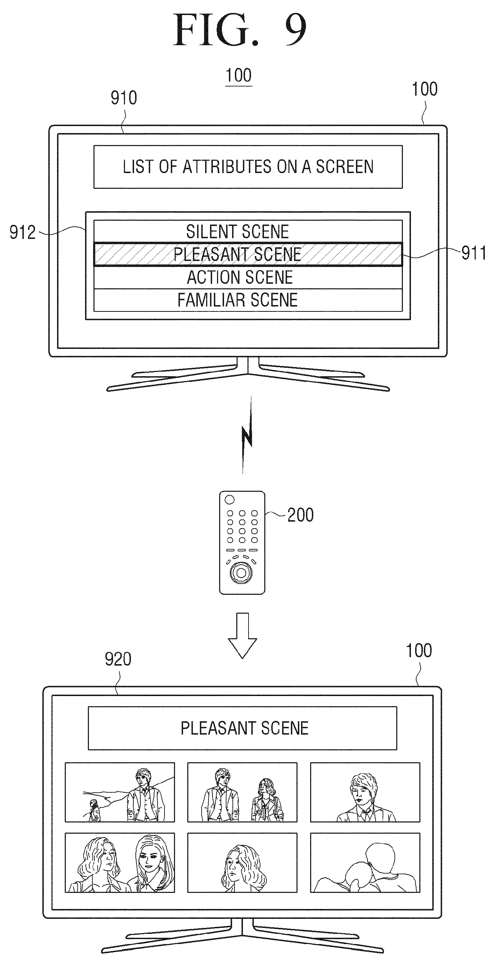

In addition, the processor may also output a list including attributes of a plurality of scenes and thumbnails of scenes having attributes selected from the list. The above will be explained in greater detail with reference to FIG. 9.

FIG. 9 is a diagram illustrating an example method of outputting scenes depending on attributes according to another example embodiments.

For example, as illustrated in FIG. 9, in response to a control signal for classifying a plurality of scenes comprising an image content and displaying the classified scenes being received from a remote control 200, the processor 120 may control the output unit 110 to output a list of attributes 912. Herein, the list of attributes 912 may be generated based on a user preference.

At this time, in response to scene attributes being searched based on a manipulation of the remote control 200, the processor 120 may control the output unit 110 to use a highlight 911 to mark selectable attributes. Herein, the selectable attributes may be marked by using not only the highlight, but also various methods.

Thereafter, in response to one attribute being selected, the processor 120 may control the output unit 110 to classify scenes corresponding to the selected scene and output the classified scenes.

For example, in response to a pleasant scene attribute 911 being selected from a list of attributes on a screen 910, the processor 120 may control the output unit 110 to output thumbnails regarding a plurality of scenes corresponding to the pleasant scene attribute 911.

FIG. 2B is a block diagram illustrating an example detailed configuration of an image content providing apparatus according to an example embodiment.

Referring to FIG. 2B, the image content providing apparatus 100 includes the output unit (e.g., including output circuitry discussed below) 110, the processor 120, the receiver 130, the image processor 140, the audio processor 150, the storage unit (e.g., a memory) 160, the remote signal receiver 170, and the input unit (e.g., including input circuitry discussed below) 180. However, these are merely one aspect of example embodiments, and according to example embodiments, some of the component elements illustrated in FIG. 1 may be eliminated or changed, and other elements may be added to the component elements.

Among component elements illustrated in FIG. 2B, the component elements illustrated in FIG. 2A will not described in detail to avoid duplicate descriptions.

The processor 130 may receive image contents. Herein, the image contents may include image data and audio data.

The receiver 130 may receive image contents from various sources.

For example, the receiver 240 is implemented in a form of including components such as a tuner (not shown), a demodulator (not shown), an equalizer, and etc. to receive image contents transmitted from a broadcasting station.

For another example, the receiver 240 may be connected to the Internet to receive image contents transmitted from an external server, and may be implemented as an input port in a various forms (e.g. HDMI and etc.) to receive the image contents transmitted from the external device.

The image processor 140 is configured to perform an image content processing. For example, the image processor 140 may perform various image processing such as decoding, scaling, noise filtering, frame rate conversion, resolution conversion, and etc. regarding image data. The image data processed by the image processor 140 may be output by a display 111.

The audio processor 150 is configured to perform a process regarding audio data comprising an image content. For example, the audio processor 150 may perform various processing such as decoding, amplification, noise filtering, and etc. regarding the audio data. The audio data processed by the audio processor 150 may be output by an audio output unit 112.

The output unit 110 is configured to output image contents. To achieve this, the output unit 110 may include a display 111 and the audio output unit 112.

The display 111 is configured to display an image comprising the image content. Specifically, the display 111 may output image data processed by the image processor 140. Furthermore, the display 111 may display various screens generated from a graphic processor 123.

To achieve this, the display 111 may be implemented by a Liquid Crystal Display (LCD), an Organic Light Emitting Display (OLED) and so on.

The display 111 may additionally include additional features according to an implementation method thereof. For example, if the display 111 uses a liquid crystal method, the display 111 may include a LCD display panel, a backlight unit for supplying lights to the LCD display panel, and a panel driving substrate for driving a panel, and so on.

The audio output unit 112 is configured to output an audio comprising the image content. Specifically, the audio output unit 112 may output audio data processed by the audio processor 150. Furthermore, the audio output unit 112 may output not only audio data, but also various types of alarm or voice message, etc.

To achieve this, the audio output unit 112 may be implemented by a speaker, but this is merely one aspect of example embodiments, and the audio output unit 112 may also be implemented by an output terminal capable of outputting audio data.

A remote control signal receiver 170 is configured to receive a remote control signal which is input from a remote control (not shown). For example, the remote signal receiver 170 may receive a remote control signal corresponding to various user commands to control an operation of the image content providing apparatus 100, and the processor 120 may perform a function corresponding to the received remote control signal.

An input unit 180 is configured to receive an input of various user commands. The processor 120 may execute a function corresponding to the user command input to the input unit 180.

To achieve this, the input unit 180 may be implemented by using an input panel. The input panel may be performed by using methods of a touch pad, or a keypad including various types of a function key, a numeric key, a special key, and a character key, etc., or a touch screen.

As illustrated in FIG. 2B, the processor 120 includes a RAM 121, a ROM 122, a graphic processor 123, a CPU 124, a first to n-th interfaces (125-1 to 125-n), and a bus 126. At this time, the RAM 121, the ROM 122, the graphic processor 123, the CPU 124, the first to n-th interfaces (125-1 to 125-n) and etc. may be connected to each other through the bus 126.

A set of commands for booting a system is stored in the ROM 122. If a turn-on command is input and a power source is supplied, the CPU 124 copies O/S stored in a storage unit 160 to the RAM 121 according to a command stored in the ROM 122, and executes the O/S for booting the system. If the booting is completed, the CPU 124 copies each type of application program stored in the storage unit 160 to the RAM 121, and executes the application program copied to the RAM 121 so as to perform each type of operation.

A graphic processor 123 is configured to generate a screen including a various objects such as an item, an image, a text, and etc. by using a calculation unit (not shown) and a rendering unit (not shown). The calculation unit calculates an attribute values such as a coordinate value, a shape, a size, a color, and etc. where each object is to be displayed according to a layout of the screen. The rendering unit generates screens having a various layouts including objects based on the attribute values calculated by the calculation unit. The screen generated from the rendering unit is displayed on a display area of the display 111.

The CPU 124 is configured to access the storage unit 160, and use the O/S stored in the storage unit 160 to perform booting. Furthermore, the main CPU 124 performs various operations by using each type of program, content, data, and etc. stored in the storage unit 160.

The first to n-th interfaces (125-1 to 125-n) is connected to the above-described each type of component elements. One of the interfaces may be a network interface connected to an external device through a network.

The storage 160 may store various software and data for executing a function of the image content providing apparatus 100.

Specifically, the storage unit 160 may store a feature extraction module 161, a scene extraction module 162, a scene attribute extraction module 163, a scene classification module 164, and etc., and the processor 120 may divide the image content into a plurality of scenes by using each of the module stored in the storage unit 160 so as to classify the divided plurality of scenes according to attributes. The above will be explained in greater detail with reference to FIG. 3.

FIG. 3 is a block diagram illustrating example modules stored in a storage unit according to an example embodiment.

In FIG. 3, firstly, the processor 120 may extract a feature value from an image and audio data by using the feature information extraction module 161. Herein, the feature information extraction module 161 may include a face feature analysis module, a motion power analysis module, a definition analysis module, a shot conversion analysis module, a Back Ground Music (BGM) analysis module, a speech analysis module, and an audio power analysis module.

Specifically, the processor 120 may use the face feature analysis module to extract a feature value regarding at least one of a size, a location, an expression, an angle, and a pose of a character's face whenever a new image frame is added to the original image.

The processor 120 may use the motion power analysis module to count a number of the character's movement per unit time so as to determine that a scene having a greater number of the character's movement has a high feature value of a motion power.

The processor 120 may use the definition analysis module to extract a blurring degree of a video image. Herein, if a movement of the character in an image is changed dramatically, it may be determined that the image has a high value of the blurring.

The processor 120 may use the shot conversion analysis module to extract a boundary of a shot constituted of a plurality of frames so as to determine a shot conversion time.

The processor 120 may use the BGM analysis module and the speech analysis module, and if it is determined that the BGM or the speech is inserted into a scene section, the processor 120 may extract a beat of the BGM, a speed of the speech, a highness and lowness of a sound regarding the BGM and the speech, and so on.

The processor 120 may use the audio power analysis module to determine an audio power. Herein, the processor 120 may determine the audio power according to a size of a frequency wave of audio data.

Secondly, the processor 120 may use the scene extraction module 162 to extract a scene of the image content. Herein, the scene extraction module 162 may include a close-up extraction module and a clustering module.

Specifically, the processor 120 may use the close-up extraction module to determine whether a size of the character's face included in the scene exceeds a preset size from image data. Herein, the processor 120 may extract a preset value.

The processor 120 may use the clustering module to detect a start point and an end point of a scene section. Specifically, the processor 120 may combine a frame number and time information corresponding to a feature value extracted from the close-up module as one set to classify the combined set of information. Herein, the processor 120 may use the classified frame number and the time information to extract time information regarding a first frame and a last frame in which a character having the same face feature value appears. By using this method, the processor 120 may detect the start point and the end point of the scene section.

The processor 120 may use the scene attribute detection module 163 to determine attributes regarding a plurality of scenes, respectively. Herein, duplicated description on the method of detecting scene attributes will not be described.

The processor 120 may use the scene classification module 164 to classify scenes according to scene attributes, generate a list of the classified scenes, and store the list in the storage unit 160.

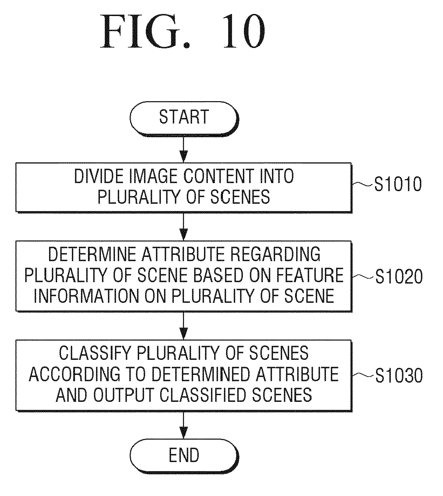

FIG. 10 is a flowchart illustrating an example control method of the image content providing apparatus 100 according to an example embodiment.

Firstly, the image content providing apparatus 100 may divide an image content into a plurality of scenes (S1010), determine attributes regarding a plurality of scenes based on feature information on the plurality of scenes, classify the plurality of scenes according to the determined attributes (S1020), and then output the classified scenes (S1030).

The control method may further include extracting an image feature value from a plurality of image frames comprising the image content and an audio feature value from audio data comprising the image content.

Herein, the image feature value may include at least one of character's face feature information, motion power information regarding the character, definition information regarding an image frame, and conversion time information regarding a plurality of shots comprising a plurality of scenes included in an image frame.

In addition, the audio feature value may include at least one of a BGM, a speech, and an audio power comprising the plurality of scenes.

The control method may further include dividing the image content into a plurality of scenes based on the extracted image feature value.

The control method may further include determining an image frame in which the same characters among a plurality of image frames appear based on the extracted image feature value, and classifying an image frame as the same scene if the image frame satisfies a condition that time intervals between image frames adjacent to each other according to a time sequence among the image frames in which the same characters appear are less than a preset time interval.

The control method may further include comparing an image feature value extracted from an image frame comprising each of the plurality of scenes and an audio feature value extracted from audio data comprising the plurality of scenes with feature information indicating attributes of each scene, and determining an attribute of each of the plurality of scenes.

The control method may further include determining a scene having the same attributes based on attributes regarding the plurality of scenes, classifying thumbnails regarding scenes having the same attributes, and outputting the classified scenes.

The control method may further include, based on a user preference, determining a scene having attributes corresponding to the user preference among attributes regarding the plurality of scenes, and outputting thumbnails regarding scenes corresponding to the user preference.

The control method may further include outputting a list including attributes regarding the plurality of scenes, and outputting thumbnails regarding scenes having the attributes selected from the list.

Meanwhile, the control method according to such various example embodiments may be implemented as a program code which is executable by a computer, and may be provided to each server or device so as to be executed by the processor 120 while being stored in various non-transitory computer readable mediums.

For example, there may be provided the non-transitory computer readable medium which stores a program for dividing an image content in the image content providing apparatus 100 of the present disclosure into a plurality of scenes, determining attributes regarding the plurality of scenes based on feature information on the plurality of scenes, classifying the plurality of scenes based on the determined attributes, and outputting the classified scenes.

The non-transitory computer readable medium refers to a medium that stores data semi-permanently, and is readable by an apparatus. Specifically, the above-described various applications or programs may be stored in the non-transitory computer readable medium such as a compact disc (CD), a digital versatile disk (DVD), a hard disk, a Blu-ray disk, a universal serial bus (USB), a memory card, a ROM or etc., and may be provided.

The foregoing example embodiments and advantages are merely examples and are not to be construed as limiting. The present teaching can be readily applied to other types of apparatuses. Also, the description of the example embodiments is intended to be illustrative, and not to limit the scope of the claims, and many alternatives, modifications, and variations will be apparent to those skilled in the art.

## Claims

1. An image content providing apparatus comprising:
an output unit comprising output circuitry configured to output an image content;
and
a processor configured to divide the image content into a plurality of scenes, to determine attributes regarding the plurality of scenes based on feature information of the plurality of scenes, and to control the output unit to classify the plurality of scenes based on the determined attributes and to output the classified scenes.

2. The image content providing apparatus as claimed in claim 1, wherein the processor is configured to extract an image feature value from a plurality of image frames comprising the image content and an audio feature value from audio data comprising the image content.

3. The image content providing apparatus as claimed in claim 2, wherein the image feature value includes one or more of feature information on a character's face included in an image frame, motion power information regarding the character, definition information regarding the image frame, and conversion time information regarding a plurality of shots comprising the plurality of scenes.

4. The image content providing apparatus as claimed in claim 2, wherein the audio feature value includes one or more of a Back Ground Music (BGM), a speech, and an audio power comprising the plurality of scenes.

5. The image content providing apparatus as claimed in claim 2, wherein the processor is configured to divide the image content into a plurality of scenes based on the extracted image feature value.

6. The image content providing apparatus as claimed in claim 5, wherein the processor is configured to determine image frames where the same characters appear among the plurality of image frames based on the extracted image feature value, and to classify the image frames as the same scenes if the image frames satisfy a condition that time intervals between the image frames adjacent to each other based on a time sequence among the image frames in which the same characters appear are less than a preset time interval.

7. The image content providing apparatus as claimed in claim 2,
wherein the processor is configured to compare an image feature value extracted from an image frame comprising each of the plurality of scenes and an audio feature value extracted from audio data comprising the plurality of scenes with feature information indicating attributes of each scene, and to determine an attribute regarding each of the plurality of scenes.

8. The image content providing apparatus as claimed in any one of the preceding claims, wherein the processor is configured to determine scenes having the same attributes based on attributes regarding the plurality of scenes, and to classify thumbnails regarding scenes having the same attributes based on the attributes and to output the classified scenes.

9. The image content providing apparatus as claimed in any one of the preceding claims, wherein the processor is configured to determine a scene having an attribute corresponding to a user's preference among attributes of the plurality of scenes based on the user's preference, and to output thumbnails regarding a scene which corresponds to the user's preference.

10. The image content providing apparatus as claimed in any one of the preceding claims, wherein the processor is configured to output a list including attributes of the plurality of scenes, and to output thumbnails regarding a scene having attributes selected from among the list.

11. A method of providing an image content, in an image content providing apparatus having an output unit comprising output circuitry configured to output an image content, comprising:
dividing the image content into a plurality of scenes;
determining attributes of the plurality of scenes based on feature information regarding the plurality of scenes; and
classifying the plurality of scenes based on the determined attributes and outputting the divided scenes.

12. The method of claim 11, further comprising:
extracting an image feature value from a plurality of image frames comprising the image content and an audio feature value from audio data comprising the image content.

13. The method of claim 12, wherein the image feature value includes one or more of face feature information of a character included in the image frame, motion power information regarding the character, definition information regarding the image frame, and conversion time information on a plurality of shots comprising the plurality of scenes.

14. The method of claim 12, wherein the audio feature information includes one or more of a BGM, a speech, and an audio power comprising the plurality of scenes.

15. The method of claim 12, further comprising:
dividing the image contents into a plurality of scenes based on the extracted image feature value.
